# FASCICULE DE BREVET EUROPEEN

(11) **EP 3 256 350 B1**
(45) Date de publication et mention de la délivrance du brevet: **16.09.2020**
(21) Numéro de dépôt: 16706990.5
(22) Date de dépôt: 10.02.2016
(51) Int. Cl.: B60R 22/48, B60R 21/015, B60R 22/10, B60N 2/28, B60R 22/12, G01D 5/16, G01L 1/00

(54) **DISPOSITIF CAPTEUR ET DISPOSITIF DE CONTRÔLE DE L'ETAT DE FONCTIONNEMENT D'UN HARNAIS D'UN SIEGE DE SECURITE**
SENSORVORRICHTUNG UND VORRICHTUNG ZUR STEUERUNG DES BETRIEBSZUSTANDS EINES GURTS EINES SICHERHEITSSITZES
FUNCTIONING STATE SENSOR AND CONTROL DEVICE OF A SAFETY SEAT BELT

(30) Priorité: 12.02.2015 FR 1500273; 12.02.2015 FR 1500274; 03.09.2015 FR 1501824
(43) Date de publication de la demande: 20.12.2017
(73) Titulaire: OSF, 61260 Val au Perche (FR)
(72) Inventeur: BAILLIARD, Laurent, 75017 Paris (FR); DEVELAY, Louis, 61260 Male (FR); DUPONT-MADINIER, Edouard, 92200 Neuilly Sur Seine (FR); HERBAULT, Patrick, 92250 La Garenne Colombes (FR)
(74) Mandataire: Camus, Olivier Jean-Claude
(86) Numéro de dépôt international: PCT/EP2016/052847
(87) Numéro de publication internationale: WO 2016/128478

(56) Documents cités:
- WO-A1-98/51545
- WO-A1-2013/055810
- FR-A1- 2 897 936
- US-A- 5 086 785
- US-A- 5 157 372
- US-A1- 2010 253 498

## Description

La présente invention concerne un dispositif pour contrôler le bon état opérationnel d'un harnais d'un siège de sécurité, et notamment d'un siège-auto pour enfant, lorsqu'un occupant est en position sur celui-ci.

Dans le domaine automobile on connaît différents systèmes qui permettent de contrôler la bonne mise en œuvre des dispositifs destinés à assurer, au moyen d'un harnais, le maintien d'un enfant sur un siège-auto.

On rappellera que la plupart des harnais destinés à équiper des sièges-auto pour enfants comportent une première sangle centrale, dite sangle d'entre-jambes, qui est fixée à l'une de ses extrémités sur le siège, et qui passe entre les jambes de l'enfant, pour se terminer, à son autre extrémité, par une boucle de verrouillage qui est destinée à recevoir une extrémité de deux autres sangles, dites sangles de maintien, qui sont disposées symétriquement par rapport au siège et qui assurent le maintien de l'enfant en position sur le siège, pour se rejoindre dans le bas de ce dernier sur une sangle, dite sangle de traction, dont la tension assure celle des sangles de maintien.

On connaît par ailleurs différents systèmes qui, pour contrôler le fait qu'un enfant soit bien attaché sur son siège, vérifient que les sangles de maintien sont bien enclenchées lors de la fermeture, dans la boucle de verrouillage. De tels systèmes se révèlent inopérants pour contrôler un bon maintien de l'enfant sur le siège tout au long d'un trajet, puisqu'ils ne sont pas en mesure de détecter et signaler un dysfonctionnement si, par exemple, l'une des sangles du harnais, pour une raison ou une autre, venait à se relâcher.

On connaît également des systèmes qui sont en mesure de détecter la présence d'un enfant sur un siège au moyen d'un palpeur disposé sur celui-ci et qui, par ailleurs, sont en mesure de contrôler la bonne fermeture de la boucle de verrouillage du harnais par la mesure de l'angle formé par la sangle d'entre-jambe et le boîtier de la boucle de verrouillage. Ainsi que le précédent, de tels systèmes ne sont pas en mesure de détecter tout dysfonctionnement ayant pour effet de relâcher la tension des sangles de maintien en cours d'utilisation.

On connaît également par la demande WO 2007/115301 des systèmes qui contrôlent la bonne mise en œuvre des dispositifs assurant le maintien d'un enfant sur un siège-auto en contrôlant, à l'installation de l'enfant sur ce dernier, la pression exercée par la boucle de verrouillage contre le siège. De tels dispositifs ne sont pas non plus en mesure de détecter les dysfonctionnements relatifs à un défaut de tension des sangles de maintien en cours de trajet.

On connaît enfin par la demande WO 98/51545 un dispositif de mesure de la tension d'une sangle de maintien d'un passager sur un siège de voiture, selon le préambule de la revendication 1, qui fait appel à un dispositif déflecteur qui oblige la sangle à suivre un chemin déterminé de façon que, lorsque la tension de la sangle augmente, le dispositif déflecteur se trouve déplacé et ce déplacement est détecté par un capteur. US5086785 montre un capteur pour détecter le déplacement angulaire d'un objet.

On remarquera par ailleurs que tous les dispositifs de contrôle précités nécessitent, pour être installés sur un siège-auto spécifique, de réaliser préalablement des modifications substantielles de celui-ci, ces dernières imposant par la suite de réaliser sur le siège modifié de nouveaux tests, tests qui sont nécessaires à son acceptation par les instances officielles de contrôle de la sécurité.

Un autre inconvénient, inhérent aux différents systèmes précédemment mentionnés, est qu'aucun de ces derniers n'est en mesure de communiquer avec les instruments de contrôle de navigation du véhicule.

La présente invention a pour but de proposer un dispositif permettant de contrôler en permanence, pendant toute la période pendant laquelle un occupant, et notamment un enfant, occupe un siège-auto, le bon maintien de celui-ci, ce système pouvant par ailleurs être disposé sur un siège de sécurité de type quelconque sans nécessiter de réaliser des modifications d'adaptation spécifiques sur celui-ci. Par ailleurs, le système de contrôle suivant l'invention est en mesure de transmettre, dans le cas où le maintien de l'occupant n'est plus assuré ou est mal assuré, un avertissement d'une part aux instruments de contrôle de navigation du véhicule et, d'autre part, à des système récepteurs annexes qui sont à la portée des utilisateurs, tels que par exemple des porte-clefs ou des « smartphones ».

La présente invention a ainsi pour objet un dispositif pour contrôler le bon état de fonctionnement d'un harnais de maintien, selon la revendication 1, destiné à un siège de sécurité, notamment un siège d'enfant, comportant au moins une sangle de maintien soumise à tension lorsque le harnais est en état de maintien d'un occupant, ledit dispositif étant destiné à être disposé en une zone déterminée de cette dernière, caractérisé en ce qu'il comporte :
- au moins un dispositif capteur comprenant un élément allongé et flexible apte à être positionné sur ladite sangle, et notamment solidarisé de celle-ci, en ladite zone déterminée et qui est pourvu de moyens de mesure aptes à mesurer, dans cette dite zone déterminée, au moins un niveau de flexion et/ou d'inclinaison de ladite sangle,
- des moyens aptes à recueillir des valeurs liées à ce niveau de flexion et/ou d'inclinaison,
- des moyens internes ou externes aptes à analyser ces valeurs et à communiquer à des moyens récepteurs des informations sur l'état de fonctionnement dudit harnais de maintien.

Suivant l'invention la sangle de maintien sera une sangle d'épaule et ladite zone déterminée se trouvera à proximité d'un endroit où celle-ci est destinée à prendre appui sur l'épaule de l'occupant.

Le dispositif capteur sera préférentiellement associé à un circuit électronique et l'élément allongé flexible sera fixé à celui-ci, notamment dans son prolongement, ces deux éléments étant contenus dans une enveloppe flexible et élastique de façon à former un module apte à être immobilisé par rapport à la sangle. Une extrémité de ce dernier pourra comporter des moyens aptes à le fixer, notamment par l'intermédiaire d'une sangle, à un appui-tête du siège-enfant.

L'enveloppe flexible pourra posséder une élasticité telle, qu'en l'absence de sollicitation, elle prenne une forme non fléchie. Cette élasticité pourra lui être communiquée, au moins en partie, par un élément ressort additionnel, notamment intégré à son enveloppe flexible. Cet élément ressort pourra être constitué d'au moins un jonc en fibre synthétique.

Le dispositif de contrôle suivant l'invention pourra comporter des moyens de gestion électronique de type notamment microcontrôleur contenant un programme de pilotage des différents capteurs associés et notamment un programme d'auto-test destiné à être lancé à chaque nouvelle utilisation du siège d'enfant.

Il pourra comporter des moyens de communication à distance avec des moyens récepteurs, notamment de type Bluetooth.

Il pourra également comporter des moyens aptes à prendre en compte les caractéristiques physique de l'occupant, notamment de l'enfant, et principalement sa taille et/ou sa corpulence.

Le dispositif capteur pouvant être intégré à une sangle de maintien.

Par ailleurs lesdits moyens de mesure pourront comporter au moins un capteur d'inclinaison, et au moins un capteur d'inclinaison pourra être constitué d'un accéléromètre.

Le dispositif capteur comprendra, dans un mode de mise en œuvre préféré de l'invention, deux inclinomètres sensiblement disposés aux extrémités respectives de l'élément allongé flexible, l'écart entre les deux valeurs délivrées par ces inclinomètres donnant une valeur du niveau de flexion de la sangle de maintien. On pourra leur adjoindre au moins un inclinomètre supplémentaire qui sera préférentiellement disposé entre les premiers.

Dans un mode de mise en œuvre de l'invention, l'élément flexible pourra comporter, à l'une de ses extrémités, une cible dont une zone est apte à s'écarter d'une zone de référence lorsqu'il est soumis à une flexion, des moyens de mesure étant prévus pour mesurer la distance existant entre la cible et ladite zone de référence. L'élément flexible pourra être formé d'un manchon allongé dont les parois supérieure et inférieure seront maintenues à distance par des éléments écarteurs, la cible étant disposée dans une partie du manchon éloignée de la sangle. Ces moyens de mesure peuvent comporter un dispositif à diode laser.

Les moyens de mesure peuvent également comprendre deux électrodes disposées sur la cible et sur la zone de référence qui constituent une capacité avec l'air qui les sépare en tant que diélectrique, ainsi que des moyens de mesure de la valeur de cette capacité.

L'élément flexible et allongé pourra également être recouvert d'un revêtement tel que sa résistance électrique varie lorsqu'on le soumet à une courbure. Cette résistance électrique pourra être constituée d'un revêtement dans lequel seront noyées des particules conductrices qui lui conféreront, lorsqu'il sera sensiblement rectiligne, une résistance donnée et, lorsqu'il sera courbé, une résistance d'une valeur différente. Il pourra comporter des moyens de mesure de la valeur de la dite résistance.

Enfin l'élément allongé flexible pourra comporter au moins un capteur capacitif.

La présente invention a également pour objet un siège de sécurité, notamment un siège-auto, comportant un dispositif de contrôle tel que décrit précédemment.

On décrira ci-après, à titre d'exemples non limitatifs, des formes d'exécution de la présente invention, en référence au dessin annexé sur lequel :
- la figure 1 est une vue en perspective d'un siège-auto pour enfant qui est équipé d'un dispositif de contrôle suivant l'invention, représenté avant le verrouillage de son harnais de maintien,
- la figure 2 est une vue arrière du siège-auto représenté sur la figure 1,
- la figure 3 est une vue de profil du siège-auto représenté sur les figures 1 et 2,
- la figure 4 est une vue du siège-auto représenté sur la figure 3 sur lequel un enfant a pris position mais n'est pas encore sanglé,
- la figure 5 est une vue du siège-auto représenté sur la figure 4 une fois les sangles passées sur les épaules de l'enfant,
- la figure 6 est une vue du siège-auto représenté sur la figure 5 une fois les sangles de maintien de l'enfant serrées,
- les figures 7 et 9 sont des vues en coupe transversale d'un premier mode de mise en œuvre d'un dispositif capteur appartenant à un dispositif de contrôle suivant l'invention, respectivement avant et après la flexion de la sangle de maintien sur laquelle il est disposé,
- la figure 8 est une vue de dessus du dispositif capteur représenté sur les figures 7 et 9,
- les figures 10 et 12 sont des vues en coupe transversale d'un second mode de mise en œuvre d'un dispositif capteur appartenant à un dispositif de contrôle suivant l'invention, respectivement avant et après flexion de la sangle de maintien sur laquelle il est disposé,
- la figure 11 est une vue de dessus du dispositif capteur représenté sur les figures 10 et 12,
- les figures 13 et 14 sont des vues schématiques de détails montrant un mode de mesure de la flexion par la mesure d'une capacité,
- les figures 15 et 17 sont des vues en coupe transversale d'un troisième mode de mise en œuvre d'un dispositif capteur appartenant à un dispositif de contrôle suivant l'invention, respectivement avant et après flexion de la sangle de maintien sur laquelle il est disposé,
- la figure 16 est une vue de dessus du dispositif capteur représenté sur les figures 15 et 17,
- la figure 18 est une vue schématique d'un exemple de mesure de la flexion fournie par le dispositif capteur représenté sur les figures 15 à 17,
- la figure 19 est une vue et schématique d'une variante de réalisation d'un dispositif capteur suivant l'invention,
- la figure 20 est un ordinogramme représentant un premier exemple d'un mode de fonctionnement de la présente invention,
- les figures 21a et 21b sont des vues de dessus partielles de dispositifs capteurs faisant appel à des capteurs capacitifs,
- la figure 22 est un ordinogramme représentant un second exemple d'un mode de fonctionnement de la présente invention,
- les figures 23a à 23c sont des vues schématiques montrant l'influence du réglage de l'appuie-tête du siège et de la taille de l'enfant sur l'inclinaison de la partie arrière de la sangle de maintien.

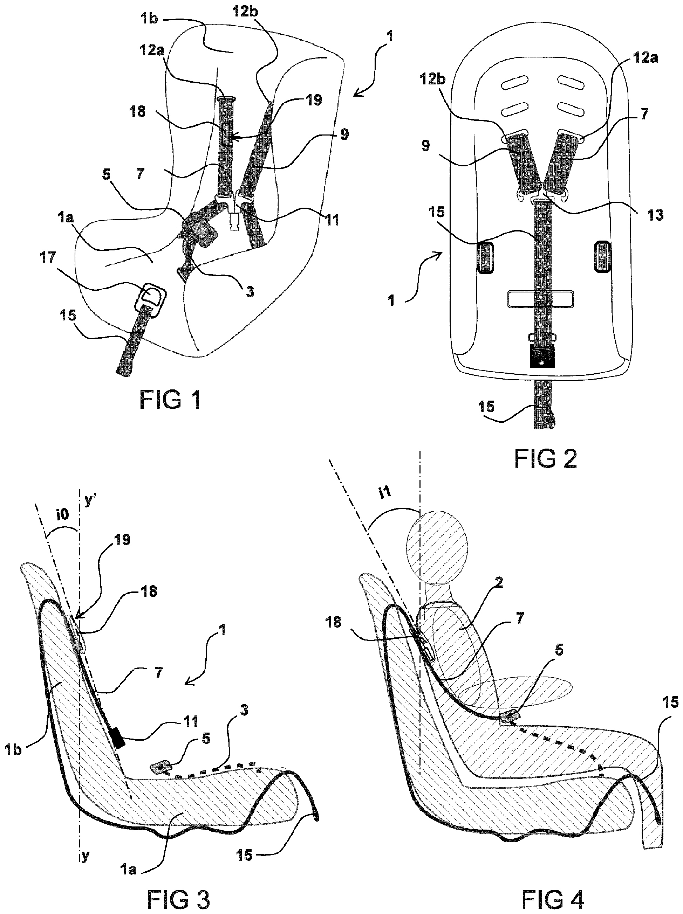

On a représenté sur les figures 1 à 6 un premier mode de mise en œuvre de la présente invention, dans lequel un siège-auto 1 pour enfant, est principalement constitué d'une coque comprenant une assise la, et un dossier 1b. La coque est pourvue d'un harnais qui comprend principalement une première sangle centrale d'entre-jambe 3 qui est fixée par l'une de ses extrémités sur l'assise la et qui comporte, à son autre extrémité, une boucle de verrouillage 5, ainsi que deux sangles latérales de maintien 7 et 9 qui sont disposées symétriquement par rapport à la coque. Les premières extrémités de chacune de ces sangles 7, 9 se rejoignent sur un crochet 11 apte à coopérer avec des moyens complémentaires de la boucle de verrouillage 5, de façon à pouvoir venir se verrouiller dans celle-ci en position d'immobilisation d'un enfant sur le siège 1.

Les autres extrémités respectives de ces deux sangles 7 et 9 traversent des orifices 12a,12b situés en partie supérieure de la coque pour se rejoindre au verso de celle-ci sur un organe de liaison 13 sur lequel vient se fixer une sangle de traction 15 qui traverse la coque pour ressortir de celle-ci au travers de moyens de blocage 17.

Dans le présent mode de mise en œuvre la sangle 7 est pourvue en sa partie supérieure, c'est-à-dire dans une zone proche de l'orifice 12a par lequel elle traverse le dossier 1b, d'un boîtier 18, réalisé dans un matériau souple et déformable, qui renferme des moyens électroniques de mesure ainsi qu'un dispositif capteur 19 suivant l'invention.

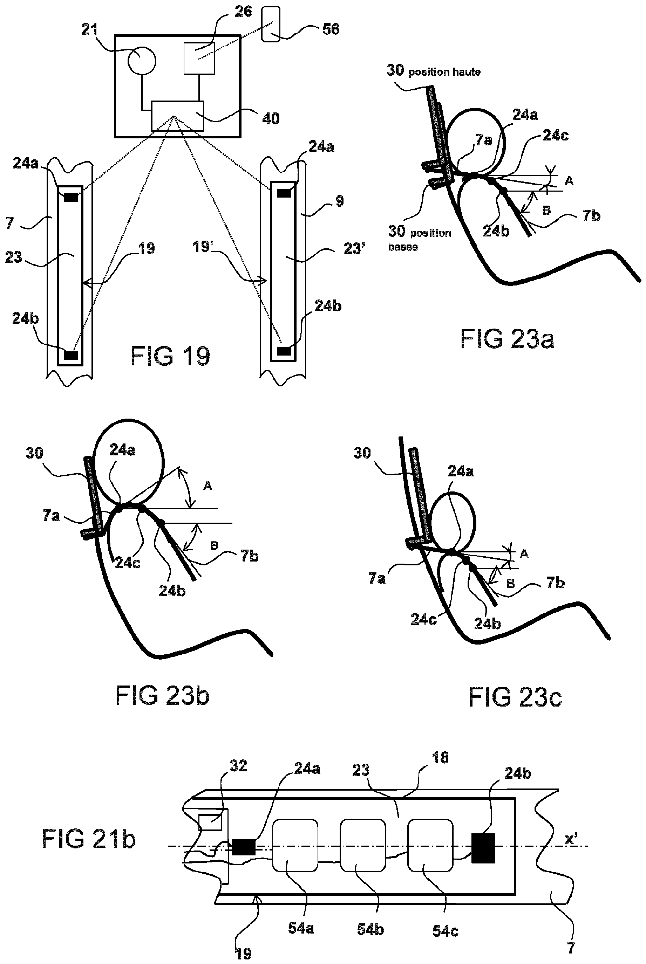

Le boîtier 18 peut être fixé sur la sangle 7 par tous moyens, notamment par agrafage, par des clips, par collage, par coincement etc ... Il pourra également être intégré, notamment lors de la fabrication, à la sangle. Préférentiellement le boîtier 18 pourra être fixé à une enveloppe entourant la sangle, cette enveloppe étant maintenue par un lien au niveau de la partie supérieure du siège ou de l'appui-tête 30 de ce dernier ainsi que représenté sur les figures 23a à 23c.

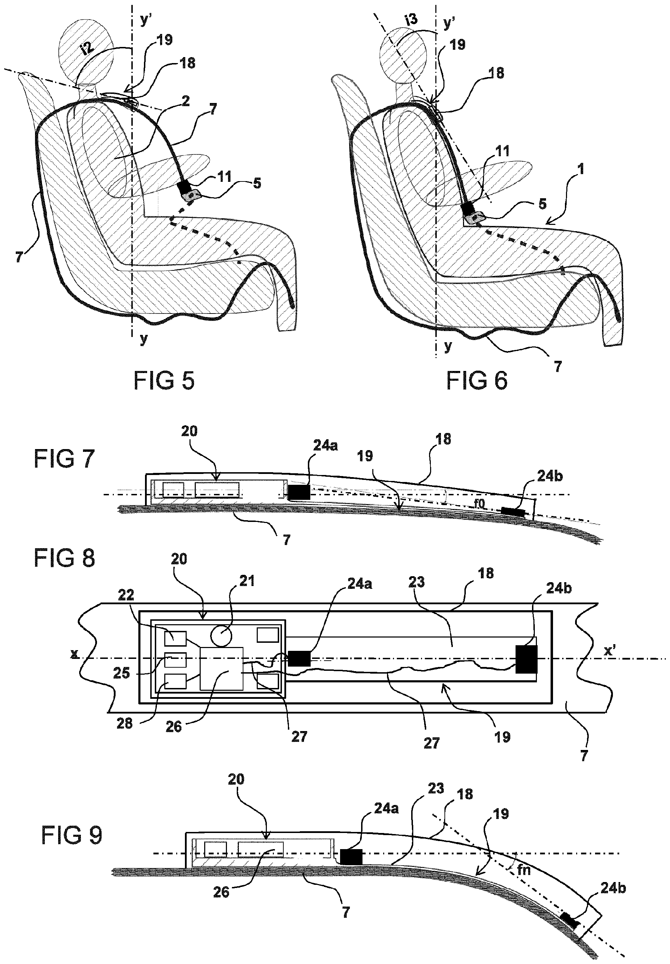

Ainsi que représenté sur les figures 7 à 9 le boîtier 18 renferme un circuit électronique 20 qui est prolongé par une languette souple 23. Le circuit électronique, qui comprend des moyens d'alimentation, par exemple constitués d'une pile au lithium 21, comprend plusieurs capteurs, à savoir un gyroscope 22, un accéléromètre 25 et un inclinomètre 28. La gestion de fonctionnement de ces différents capteurs ainsi que celle du dispositif capteur 19 est assurée par un microcontrôleur 26 qui est pourvu de moyens de programmation en mesure de mettre en œuvre le dispositif de contrôle suivant l'invention.

Le dispositif capteur 19 qui, à l'intérieur du boîtier 18, prolonge le circuit électronique 20 comprend la languette souple 23 qui supporte deux accéléromètres 24a et 24b qui sont pourvus, de façon connue, d'une fonction inclinomètre que l'on va utiliser dans le cas présent. Les deux accéléromètres sont préférentiellement disposés sensiblement aux extrémités de la languette souple 23 et sont reliés au microcontrôleur 26 par une liaison filaire 27. Ainsi que représenté sur les figures 7 et 9 chacun des accéléromètres mesure son inclinaison respective fo et fn par rapport à une même référence, et le microcontrôleur 26 est en mesure de déterminer facilement par la différence de ces deux valeurs la valeur f de la flexion prise par la languette souple 23 et donc la flexion prise par la sangle 7, soit f=fn-f0.

Dans un mode de réalisation simplifié de la présente invention on pourra utiliser simplement soit un inclinomètre soit un dispositif capteur. On comprend que la précision des informations dont l'utilisateur pourra disposer sera alors bien entendu inférieure mais elle pourra se révéler intéressante pour des réalisations simples et de coût réduit.

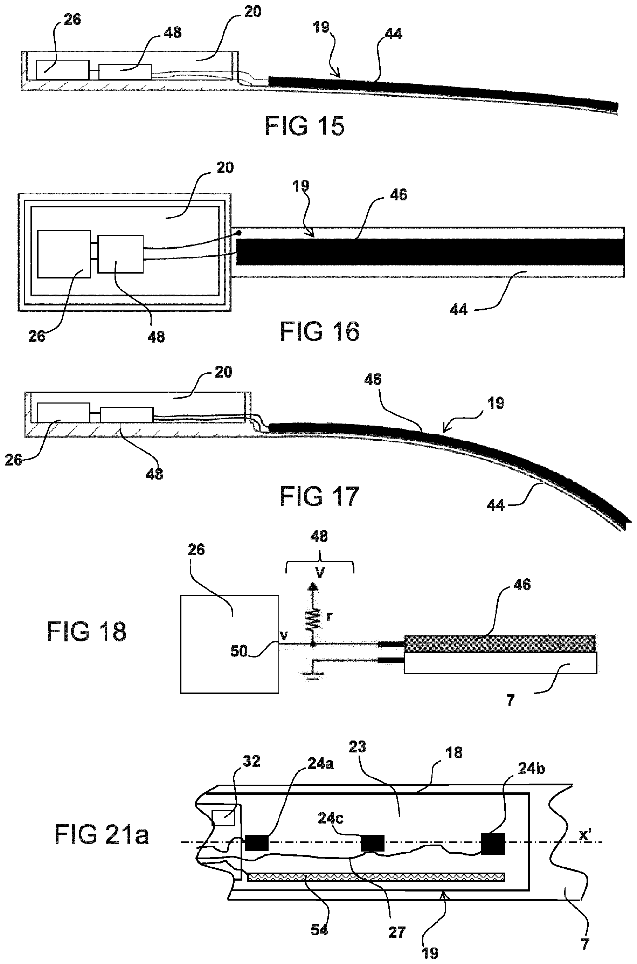

On peut également, ainsi que représenté sur la figure 21a, faire appel à un troisième accéléromètre 24c qui sera disposé entre les accéléromètres 24a et 24b. Cet accéléromètre permettra au microcontrôleur 26 d'intégrer dans son processus de gestion la taille de l'enfant qui est disposé sur le siège, ainsi qu'exposé ci-après.

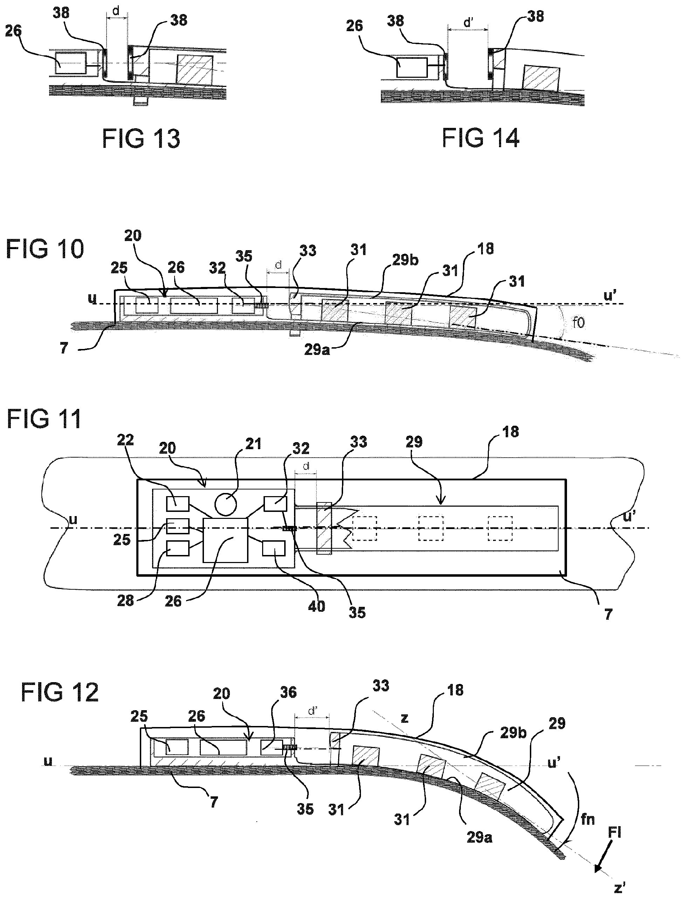

On pourrait bien entendu faire appel à un dispositif capteur 19 utilisant des moyens de mesure différents de celui décrit précédemment. Ainsi, dans un second mode de mise en œuvre de la présente invention, qui est représenté sur les figures 10 à 12, le circuit électronique 20 est prolongé par un dispositif capteur 19 comprenant un fourreau 29 réalisé en une matière déformable et élastique, telle que par exemple en polyamide, en polyéther, en polyester, en isocyanate, etc. Ce fourreau 29 possède une rigidité suffisante pour que, en l'absence de sollicitation, il soit en mesure de reprendre sa forme rectiligne ainsi que représenté sur la figure 10. Le fourreau 29 comprend une paroi inférieure 29a maintenue en contact avec la sangle 7 et une paroi supérieure 29b. La face interne de la paroi inférieure 29a reçoit des écarteurs 31 qui ont pour fonction de maintenir écartées les deux parois inférieure 29a et supérieure 29b.

Le dispositif capteur dispose de moyens permettant de mesurer la distance existant entre une cible 33, disposée à son extrémité proche du circuit électronique 20 et une partie fixe de ce dernier, dite zone de référence, ainsi que représenté sur les figures 10 à 12. Ces moyens sont par exemple constitués d'une diode laser 35 disposée de façon que l'axe uu' de son faisceau soit sensiblement perpendiculaire à la cible 33 lorsque le dispositif capteur n'est que peu courbé. La diode laser 35 est reliée à une interface 32 reliée au microcontrôleur 26 qui est en mesure de déterminer la distance d existant entre elle et la cible 33.

Dans ces conditions on comprend que lorsque l'on exerce un effort de flexion Fl sur la sangle 7 le dispositif capteur 19 dont la face inférieure 29a est solidaire de celle-ci se déforme, ainsi que représenté sur la figure 12, et que l'écartement existant entre la diode laser 35 et la cible 33 augmente pour prendre une valeur d'. Le microcontrôleur 26 qui reçoit cette information, est ainsi en mesure de déterminer la déformation angulaire f1, f2, ... fn subie par la sangle 7 au cours de sa déformation et d'en déduire la flexion subie par celle-ci.

Ainsi que représenté sur les figures 13 et 14, les moyens de mesure de la distance d pourraient également être constitués par deux électrodes 38 qui constituent avec l'air qui les sépare en tant que diélectrique une capacité dont la valeur est fonction de la distance d qui les sépare. Toute flexion de la sangle 7 entraîne celle du dispositif capteur 19 et la distance séparant les deux électrodes 38 augmente et devient égale à d'. La valeur de la capacité existant entre les deux électrodes 38 est envoyée au microcontrôleur 26 qui est en mesure d'en déduire la valeur de la distance d'. Connaissant le nouvel écartement d' le microcontrôleur 26 est en mesure d'en déduire la flexion prise par la sangle 7.

Par ailleurs, le circuit électronique 20 est pourvu de moyens de communication 40, notamment de type Bluetooth, qui sont en mesure de transmettre vers des récepteurs extérieurs, tels que notamment des appareils de type « smartphone », ou des récepteurs intégrés au véhicule, et notamment à son tableau de bord, les paramètres collectés ou des informations résultant de l'analyse de ces derniers qui sont gérées par le microcontrôleur 26. Ces appareils récepteurs pourront disposer à cet effet d'une application spécifique apte à gérer les informations transmises par les moyens de communication 40.

On pourrait également faire appel à un autre type de dispositif capteur par exemple tel que celui représenté sur les figures 15 à 18.

Ainsi que précédemment un circuit électronique 20 du type notamment de celui précédemment décrit est associé à une bande souple et élastique 44, par exemple en un composé de polyamide, polyéther, polyester, isocyanate, etc. Cette bande 44 possède cependant une rigidité suffisante pour que, en l'absence de sollicitation, elle soit en mesure de reprendre sa forme sensiblement rectiligne ainsi que représenté sur la figure 15. On pourra bien entendu augmenter, si nécessaire, la raideur de la bande souple en l'associant à un élément ressort de plus forte raideur réalisé par exemple soit en matière de synthèse soit en métal.

On pourra également, ainsi que décrit précédemment, disposer l'ensemble constitué du circuit électronique 20 et du dispositif capteur 19 dans un boîtier récepteur, non représenté sur le dessin, constitué d'un matériau souple déformable et élastique.

La bande 44 reçoit, sur toute sa longueur, un revêtement 46 réalisée en une encre polymère spécifique dans laquelle sont noyées des particules conductrices qui lui confèrent, lorsqu'elle est sensiblement rectiligne, ainsi que représenté sur la figure 15, une résistance de valeur R et lorsqu'elle est courbée, ainsi que représenté sur la figure 17, une résistance d'une valeur R' différente, notamment une valeur supérieure. Ainsi, suivant l'invention, il suffit de mesurer la valeur de la résistance R de l'empreinte 46 pour être en mesure de déterminer la courbure de la bande 44, et donc celle de la sangle 7.

Cette mesure pourra être faite par tout moyen et notamment, ainsi que représenté sur la figure 18, au moyen d'un pont diviseur 48 en mesure, de façon connue, d'appliquer à une entrée 50 du microcontrôleur 26 une tension v qui est fonction de la résistance R du revêtement 46 et donc de la flexion de la sangle 7.

Suivant l'invention le boîtier 18 tel que décrit précédemment et qui est réalisé en une matière souple déformable devra posséder de plus une élasticité telle que, lorsqu'il n'est soumis à aucune sollicitation il revienne à une position dite initiale qui est préférentiellement voisine d'une position sensiblement rectiligne, ainsi que représenté sur les figures 7, 10, et 15. Le boîtier 18 possédera une telle élasticité en raison de sa matière constitutive et/ou en recevant des éléments ressorts notamment constitués de joncs élastiques en matière de synthèse qui seront préférentiellement enfilés dans des logements longitudinaux appropriés prévus dans celui-ci.

On décrira ci-après un exemple de fonctionnement de l'invention. Sur la figure 3 qui représente le siège 1 vide, le boîtier souple 18 contenant le dispositif capteur 19 , et en conséquence l'axe de référence de l'inclinomètre contenu dans celui-ci, forme par rapport à la verticale yy' un angle i0 et cette valeur est transmise au microcontrôleur 26 qui connaît ainsi la valeur du paramètre inclinaison i.

Le gyroscope 22 est quant à lui en mesure de détecter tout mouvement appliqué au siège 1, notamment lorsque l'utilisateur dispose un enfant 2 sur celui-ci et est en mesure de transmettre au microcontrôleur 26 la valeur d'un paramètre secousse g.

Il en est de même de l'accéléromètre 25 du circuit électronique 20 qui détecte toute secousse appliquée au siège par rapport au véhicule ainsi que tout déplacement de ce dernier dans l'espace et qui est en mesure de transmettre au microcontrôleur 26 la valeur du paramètre accélération a.

Sur le plan pratique, et bien que dans le présent mode de mise en œuvre de l'invention on considère que l'inclinomètre est constitué d'un dispositif distinct de l'accéléromètre, on peut utiliser ce dernier pour fournir également le paramètre inclinaison i, ainsi qu'exposé ci-après.

Pour chacun des états rencontrés au cours d'une période de fonctionnement qui peut être notamment de l'ordre de 10 secondes, le microcontrôleur 26 établit un tableau de valeurs des différents capteurs. Ainsi, à l'état de repos, c'est-à-dire avant qu'un enfant n'ait pris position sur le siège 1, nous aurons par exemple les valeurs suivantes :
Gyroscope 22:g=0
Accéléromètre 25 :a=0
Inclinomètre 28:i=0
Dispositif capteur 19 :f=0

Ces différentes valeurs sont regroupées par le microcontrôleur 26 dans une matrice dont la valeur sera représentée par: [gaif] et cette dernière est communiquée, via les moyens de communication Bluetooth 40, à l'application contenue dans un récepteur de l'utilisateur qui la décode suivant un logiciel adéquat, notamment une application spécifique dans le cas d'un « smartphone » 56 et en déduit qu'il n'y a pas d'enfant dans le siège. Bien entendu un tel traitement peut également être effectué par le microcontrôleur 26 lui-même.

Lorsqu'un enfant 2 prend place sur le siège 1, ainsi que représenté sur la figure 4, le gyroscope 22 et l'accéléromètre 25 détectent les secousses occasionnées par cette mise en place et les paramètres des capteurs prennent alors les valeurs suivantes :
Gyroscope 22:g=1
Accéléromètre 25:a=0
Inclinomètre 28:i0
Dispositif capteur 19 :f0

La matrice de valeurs devient ainsi [1000] et est recueillie par le microcontrôleur 26 puis communiquée par celui-ci au récepteur qui en déduit qu'un enfant a bien pris position sur le siège 1 et que, dans la mesure où ni l'inclinomètre 28 ni le dispositif capteur 19 n'ont changé de valeur de manière significative la sangle 7 est restée appliquée sur le siège et que, en conséquence, l'enfant 2 n'est pas encore sanglé. L'application affiche alors sur le smartphone un message du type « Enfant sur le siège ».

Ensuite, ainsi que représenté sur la figure 5, lorsque l'on passe la sangle 7 par dessus une épaule de l'enfant, les valeurs de l'inclinomètre 28 changent et les paramètres des capteurs prennent alors les valeurs suivantes :
Gyroscope 22:g=1
Accéléromètre 25:a=0
Inclinomètre 28:i=1
Dispositif capteur 19 :f=0

La matrice de valeurs devient alors égale à [1010] et est recueillie par le microcontrôleur 26 et communiquée par celui-ci à l'application. En l'espèce le logiciel constate d'une part qu'une inclinaison a été détectée, ce qui signifie que celle-ci est supérieure à ce qu'elle devrait être si la sangle 7 était serrée. Le logiciel constate d'autre part qu'une flexion n'a pas été détectée (f=0) ce qui implique que la sangle n'a pas été serrée. L'application est dès lors en mesure d'afficher, si on le souhaite, un message du type : « Enfant non sanglé ».

Lorsque, ainsi que représenté sur la figure 6, on serre correctement la sangle de maintien 7, la valeur de la flexion change et le paramètre flexion f établi par le dispositif capteur 19 devient égal à 1. Les paramètres des capteurs prennent alors les valeurs suivantes :
Gyroscope 22:g=1
Accéléromètre 25:a=0
Inclinomètre 28:i=1
Dispositif capteur 19 :f=1

La matrice de valeurs devient égale à [1011] et est recueillie par le microcontrôleur 26 et communiquée par celui-ci au récepteur. Le logiciel de celui-ci constate, qu'hormis le paramètre accélération qui est resté à 0 (ce qui signifie que le véhicule est à l'arrêt), tous les autres paramètres sont à 1, ce qui signifie que l'enfant est correctement sanglé. L'application affichera en conséquence un message du type « Enfant correctement sanglé ».

On pourrait bien entendu également, dans un mode de mise en œuvre simplifié de l'invention, ne pas mettre en œuvre le caractère redondant des paramètres d'inclinaison et de flexion et pour ce faire ne faire appel qu'à un inclinomètre ou qu'à un dispositif capteur 19 pour déterminer si l'enfant est correctement sanglé.

Lorsque le véhicule démarre, son mouvement est détecté par l'accéléromètre 25 et le paramètre accélération a passe à 1. Les paramètres des capteurs prennent alors les valeurs suivantes :
Gyroscope 22:g=1
Accéléromètre 25:a=1
Inclinomètre 28:i=1
Dispositif capteur 19 :f=1

La matrice de valeurs devient égale à [1111] et est recueillie par le microcontrôleur 26 et communiquée par celui-ci au récepteur. Le logiciel de ce dernier est ainsi en mesure d'en déduire que le véhicule est en déplacement et que l'enfant est correctement sanglé.

Ainsi, tant que le paramètre accélération a=1, le dispositif sait que le véhicule est en cours de déplacement et si pendant cette période, ou période de trajet, l'enfant se détache, la sangle 7 se trouve alors dans une position voisine de celle représentée sur la figure 3 et les valeurs des paramètres deviennent alors :
Gyroscope 22:g=1
Accéléromètre 25 :a=1
Inclinomètre 28:i=0
Dispositif capteur 19 :f=0

La matrice de valeurs devient égale à [1100] et est recueillie par le microcontrôleur 26 et communiquée au récepteur qui déduit que le véhicule roule mais que la sangle 7 a repris sa position initiale ce qui implique que l'enfant est détaché. L'application adresse alors un rappel impératif au récepteur de l'utilisateur qui peut être à la fois sonore et visuel et du type « Attention enfant désanglé ».

Dans l'hypothèse où seule la boucle de serrage du harnais viendrait à se détacher, le dispositif capteur 19 reprendrait alors, en raison de sa raideur propre, une forme non courbée et le paramètre flexion prendrait la valeur f=0. Les valeurs des paramètres deviennent alors :
Gyroscope 22:g=1
Accéléromètre 25:a=1
Inclinomètre 28:i=1
Dispositif capteur 19 :f=0

La matrice de valeurs devient égale à [1110] et est recueillie par le microcontrôleur 26 et communiquée au récepteur qui en déduit que le véhicule roule, que la sangle 7 est bien restée sur l'épaule de l'enfant mais que la boucle de maintien 5 n'est pas bouclée. L'application adresse alors un message du type « Attention enfant désanglé.

De façon intéressante le dispositif de contrôle suivant l'invention peut comporter des moyens permettant d'enregistrer, notamment dans le microcontrôleur 26, les paramètres de différents modèles de siège-enfant et notamment la valeur i0 de l'inclinomètre 28 et la valeur f0 du dispositif capteur 19 correspondant à la situation représentée sur la figure 3 c'est-à-dire lorsque le siège n'est pas occupé par un enfant.

Dans différentes variantes de réalisation de la présente invention on peut améliorer la fiabilité du dispositif de contrôle en mettant en œuvre plusieurs dispositifs capteurs sur un même siège, ces derniers pouvant être de même type ou de types différents.

Ainsi, comme représenté sur la figure 19, le dispositif de contrôle suivant l'invention comprend deux dispositifs capteurs 19 et 19' qui sont respectivement disposés sur les deux sangles de maintien 7 et 9. Ces deux dispositifs capteurs 19 et 19' comprennent chacun deux accéléromètres 24a et 24b qui sont disposés sur une languette souple et élastique 23, 23'. Chacun des capteurs 19, 19' est en communication avec le microcontrôleur 26 par une communication à distance via les moyens de communication 40, figurée par une ligne en pointillé sur le dessin. Ainsi le microcontrôleur 26 est en mesure de déterminer facilement les valeurs de flexion respectives f et f' des bandes 23 et 23', et donc celles de chacune des sangles 7 et 9, par la simple différence des valeurs délivrées par les deux inclinomètres. Le microcontrôleur 26 comporte par ailleurs des moyens de discrimination, de type connu, permettant de traiter la redondance des valeurs de flexion communiquées par les deux dispositifs capteurs 19, 19' disposés sur les deux sangles 7 et 9 en cas de conflit des informations communiquées par ces derniers.

Le dispositif de contrôle suivant l'invention peut également comporter des moyens permettant de prendre en compte de façon automatique l'influence de la corpulence de l'enfant, et notamment sa taille, lorsqu'il est en position sur le siège et que la sangle de maintien est passée sur son épaule, ainsi que représenté sur les figures 23a à 23c.

Le dispositif est en mesure de déterminer cette situation et donc d'enregistrer les paramètres des différents capteurs, ces valeurs servant de références pour détecter une nouvelle situation. D'une part l'angle d'inclinaison de la bretelle par rapport à l'horizontale est connu au moyen d'un inclinomètre 24a situé à une extrémité du boîtier souple 18 du dispositif, angle dont la valeur variera en fonction de la corpulence réelle ou induite de l'enfant installé dans le siège. D'autre part la courbure de cette sangle au niveau de l'épaule et du thorax de l'enfant sera connue par la valeur de l'angle mesuré par le dispositif capteur 19. Ces valeurs comparées aux valeurs de références stockées dans une matrice dite adaptative permettent de déduire par le biais d'algorithmes appropriés, la situation exacte du sanglage de l'enfant.

Plus précisément, et ainsi que représenté sur la figure 23a, pour un enfant de taille médiane, la partie arrière 7a de la sangle 7 sera légèrement inclinée vers le bas si l'appuie-tête 30 du siège est réglé vers le haut et, inversement, elle sera légèrement inclinée vers le haut si l'appuie-tête 30 est réglé vers le bas, pour être sensiblement horizontale pour un l'appuie-tête réglé en position intermédiaire.

On prendra ci-après en considération l'angle A formé par la partie arrière 7a de la sangle 7 avec une direction de référence, qui est donné par le capteur 24a, et l'angle B formé par la partie avant 7b de celle-ci avec la même direction de référence, qui est fourni par le capteur 24b. Pour un enfant ayant une taille maximale, c'est-à-dire de celle autorisée par la législation, et pour un appuie-tête 30 réglé au maximum de hauteur, ainsi que représenté sur la figure 23b, la partie arrière 7a de la sangle 7 est inclinée vers le haut et l'angle de flexion maximale B-A de la sangle 7 est maximal.

À l'inverse, pour un enfant de taille minimale et pour un appuie-tête 30 réglé au minimum de hauteur, ainsi que représenté sur la figure 23c, la partie arrière 7a de la sangle est inclinée vers le bas et l'angle de flexion B-À est minimal.

Dans ces conditions on constate que la partie arrière 7a de la sangle 7 est significative du réglage en hauteur de l'appuie-tête 30 et que sa partie avant 7b est significative d'un bon sanglage. Suivant l'invention, on positionne entre les deux accéléromètres 24a et 24b tels que prévus dans le mode de mise en œuvre illustré sur les figures 7 à 9, un troisième accéléromètre 24c (figure 21a) qui va permettre au microcontrôleur 26 de discriminer entre la valeur de la flexion de la partie arrière 7a de la sangle 7 due au réglage de l'appui-tête en regard de la taille de l'enfant avec la flexion de ladite partie avant 7b significative d'un bon maintien de ce dernier.

Le dispositif de contrôle suivant l'invention pourra également comporter des moyens permettant, une fois que l'enfant est correctement sanglé sur le siège, ainsi que représenté sur la figure 6, d'enregistrer les valeurs des paramètres d'inclinaison et de flexion correspondant à cette situation, paramètres qui serviront par la suite de référence au système pour reconnaître le bon maintien ou non de l'enfant sur le siège. Ainsi on procédera comme exposé précédemment, c'est-à-dire en comparant les valeurs relevées au moyen des capteurs avec les valeurs de référence enregistrées dans la matrice adaptative.

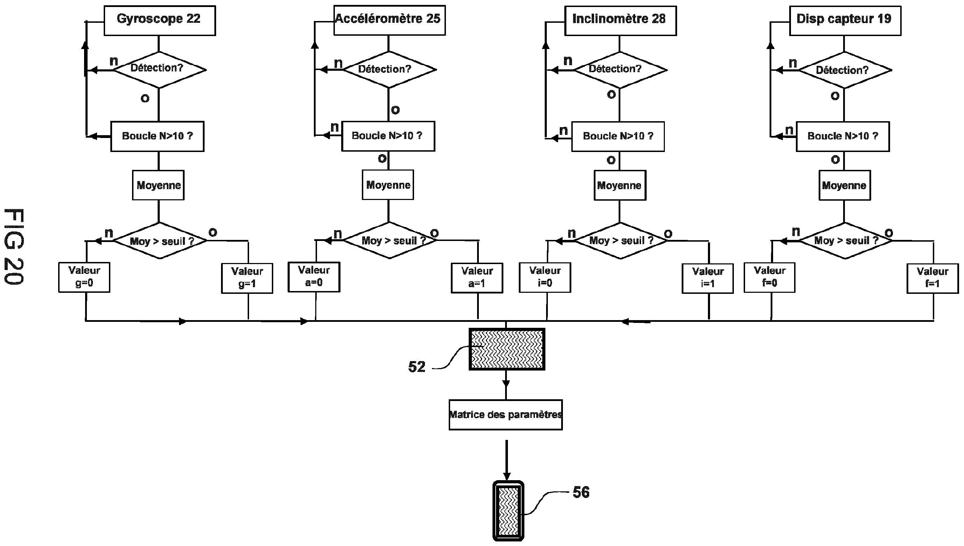

On a représenté sur la figure 20 un ordinogramme montrant un exemple de fonctionnement d'un dispositif de contrôle suivant l'invention.

Le microcontrôleur 26 comporte des moyens de « mise en sommeil » de l'ensemble de l'électronique qu'il commande lorsque l'inclinomètre 28 et le dispositif capteur 19 ne sont pas sollicités. Lorsque l'utilisateur dispose un enfant 2 dans le siège, le gyroscope 22 est sollicité et il transmet l'information a une boucle de comptage qui mesure le nombre d'informations que le gyroscope lui envoie pendant un temps donné, par exemple deux secondes. Une telle disposition permet de créer un filtrage permettant d'éliminer des détections parasites. Si ce nombre d'informations est supérieur à une valeur prédéfinie, par exemple de 10 dans l'exemple représenté sur la figure 20, le microcontrôleur 26 fait la moyenne des valeurs recueillies puis cette moyenne est comparée à une première valeur de seuil gs et, si elle dépasse cette valeur de seuil le paramètre gyroscope prend la valeur 1 (g=1) et, dans le cas contraire il prend la valeur 0 (g=0). Cette valeur du paramètre gyroscope g est mise dans une mémoire 52 de façon à la combiner avec les valeurs recueillies par les autres capteurs de façon à former une matrice de données du type :[gaif]. Ainsi, si le gyroscope 22 est le seul capteur à réagir, la matrice de paramètres sera : [1000] .

Cette matrice est envoyée par le microcontrôleur 26 via les moyens de communication Bluetooth 40, à une application réceptrice chargée par exemple sur un « smartphone » 56.

Les autres capteurs, à savoir l'accéléromètre 25, l'inclinomètre 28 et le dispositif capteur 19 comportent, ainsi que représenté sur la figure 20, des éléments d'orninogramme de même type, si bien que, si en plus du gyroscope l'accéléromètre 25 réagit et si, comme précédemment, la valeur moyenne des signaux est plus grande qu'une seconde valeur de seuil as, alors le paramètre d'accélération a devient égal à 1 et la matrice de paramètres devient égale à : [1100].

On raisonnerait de même pour le paramètre inclinomètre i fourni par l'inclinomètre 28 et pour le paramètre f fourni par le dispositif capteur 19.

Nous envisagerons ci-après, à titre d'exemples, les situations principales en mesure d'intervenir au cours d'un processus en partant de la situation d'un siège au repos jusqu'à ce que, de nouveau, le siège revienne au repos après que le véhicule ait fait un trajet avec l'enfant.

| Situation | Matrice des paramètres | Message |
|---|---|---|
| Siège au repos : | 0000 | |
| Enfant sur le siège : | 1000 | Enfant sur le siège |
| Sangle passée sur épaule : | 1010 | Enfant non sanglé |
| Harnais serré : | 1011 | Enfant correctement sanglé |
| Véhicule en marche et sangle débouclée : | 1110 | ATTENTION ENFANT DESANGLE |
| Véhicule arrêté,enfant détaché | 1000 | Enfant détaché |
| Enfant a quitté le siège | 0000 | |

Suivant l'invention le récepteur distant pourra, outre le « smartphone » 56 mentionné précédemment, être constitué par un objet en possession de l'utilisateur et pourra par exemple être constitué par un porte-clefs de ce dernier.

Dans un mode de mise en œuvre simplifié de l'invention le microcontrôleur 26 ne sera pas en communication avec un récepteur distant tel qu'un « smartphone » mais sera en mesure d'émettre lui-même les informations à destination de l'utilisateur, notamment par voie sonore. Ces avertissements pourront être constitués par des sons de différentes natures générés par un ou plusieurs « buzzer » ou par des messages vocaux émis par un synthétiseur vocal associé au microcontrôleur 26.

Dans une variante de la présente invention, un vibreur peut être ajouté au dispositif qui, dans un but pédagogique et de prévention, avertira d'abord l'enfant, lui rappelant qu'il ne doit pas se désangler quand il est installé dans son siège et que le véhicule se déplace.

Un capteur de présence, par exemple capacitif, notamment un capteur exploitant la variation de la capacitance d'une boucle de détection lorsqu'un corps massique est approché de celle-ci, peut être ajouté au dispositif, pour introduire une redondance dans les capteurs, de façon que le dispositif satisfasse au standard automobile qui impose qu'un capteur en défaut permette au système de continuer à fonctionner sans danger. A cet effet et ainsi que représenté sur la figure 21a le dispositif capteur 19 peut comporter une antenne capacitive 54 qui s'étend par exemple suivant la longueur de la languette souple 23 et qui permet au microcontrôleur 26 de détecter, éventuellement en redondance du gyroscope 22, la présence d'un enfant sur le siège 1.

Dans une variante, et ainsi que représenté sur la figure 21b, on a disposé sur la languette souple 23 trois antennes capacitives 54a, 54b, 54c qui sont reliées microcontrôleur 26. Ces antennes capacitives qui sont éventuellement disposées entre les accéléromètres 24a et 24b, permettent au microcontrôleur 26 de disposer d'une mesure de capacité liée à la présence d'eau dans le corps de l'enfant à travers les vêtements de celui-ci et qui est représentative de la distance de ce capteur avec le corps de l'enfant. Ainsi, dans le cas où l'enfant est correctement sanglé, le boîtier 18 contenant le dispositif capteur 19 se trouve quasiment parallèle au corps de l'enfant à cet endroit, si bien que les mesures capacitives fournies par les trois antennes capacitives 54a, 54b et 54c seront proches les unes des autres, et ceci indépendamment des autres facteurs impliqués, tels que notamment l'épaisseur des vêtements de l'enfant, que ce dernier soit habillé légèrement d'un teeshirt ou d'un épais manteau. Dans le cas contraire le microcontrôleur 26 disposera d'une information complémentaire à celle des autres capteurs suivant laquelle le sanglage et donc le maintien correct de l'enfant n'est pas assuré.

Suivant l'invention le logiciel de pilotage du microcontrôleur 26 pourra comporter un programme d'auto-test qui sera lancé à chaque nouvelle utilisation du siège-auto, notamment après un arrêt prolongé.

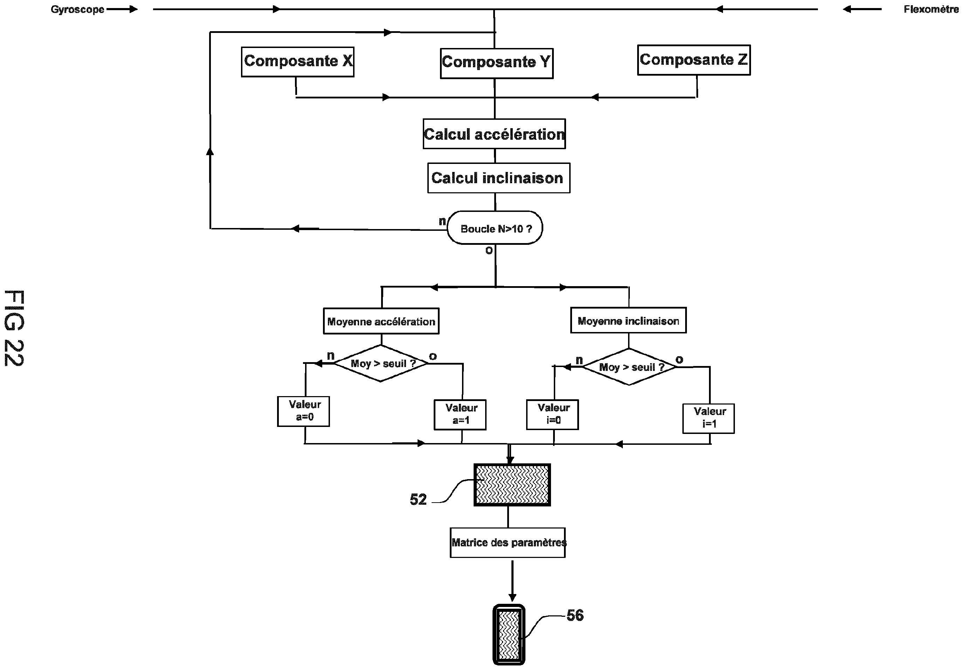

Dans une variante de la présente invention l'inclinomètre sera constitué par l'accéléromètre lui-même qui sera ainsi en mesure de fournir d'une part l'accélération proprement dite du véhicule et ceci suivant trois axes xx', yy', zz', ainsi que l'inclinaison du boîtier 18 contenant le circuit électronique 20 et le dispositif capteur 19 . Dans ces conditions l'ordinogramme relatif à l'accéléromètre 25 et à l'inclinomètre 28 est remplacé par celui représenté sur la figure 22.

Bien entendu, et ainsi que mentionné précédemment, les moyens de traitement du signal peuvent comporter des éléments électroniques aptes à transmettre à distance le signal d'alarme, par exemple via une liaison Bluetooth 40 sur le « smartphone » 56 de l'utilisateur au travers d'une application dédiée de celui-ci. Les moyens de traitement du signal pourraient également transmettre le signal d'alarme à un objet de l'utilisateur notamment au moyen d'une liaison de type radio fréquence. Ils pourraient également transmettre le signal d'alarme à des éléments récepteurs solidaires du tableau de bord de l'automobile.

La présente invention est particulièrement intéressante en ce que le présent dispositif de contrôle peut être disposé sur un siège quelconque, quelque soit le type et la marque de celui-ci, sans qu'il soit nécessaire, à l'inverse des dispositifs de l'état antérieur de la technique, de réaliser une adaptation technique si minime soit-elle sur le siège.

Une telle disposition permet ainsi aux fabricants de sièges pour enfant de disposer le dispositif de contrôle sur les différents modèles de leur gamme de sièges existants sans modification de ces derniers, et permet de plus à l'utilisateur de pouvoir mettre en oeuvre le dispositif de contrôle sur divers sièges en sa possession sans modification.

Le système suivant l'invention se révèle particulièrement facile d'installation puisqu'il suffit pour le mettre œuvre de le fixer en partie supérieure de l'une des sangles, c'est-à-dire dans une zone voisine de celle où la dite sangle traverse le dossier du siège.

Bien que le dispositif de contrôle suivant la présente invention se révèle particulièrement intéressant pour contrôler le bon état de fonctionnement et de tension d'un harnais de siège-auto pour enfant, il pourrait également être utilisé dans d'autres domaines où il est nécessaire de maintenir un occupant sur un siège dans de bonnes conditions de sécurité.

Un tel siège pourrait, bien entendu, être un siège destiné à un adulte et pourrait être constitué non seulement d'un siège-auto mais également d'un siège du type utilisé dans d'autres moyens de locomotion et notamment dans le domaine de l'aviation.

La sangle assurant le maintien d'un occupant sur un siège pourrait également être autre qu'une sangle d'épaule et pourrait notamment être une sangle ventrale.

## Revendications

1. Dispositif configuré pour contrôler le bon état de fonctionnement d'un harnais de maintien, destiné à un siège de sécurité (1) le siège de sécurité comportant au moins une sangle de maintien (7,9) soumise à tension lorsque le harnais de maintien est en état de maintien d'un occupant, ledit dispositif de contrôle étant configuré pour être disposé en une zone déterminée de la sangle de maintien, le dispositif de contrôle étant **caractérisé en ce qu'**il comporte :
- au moins un dispositif capteur (19) comprenant un élément allongé et flexible (23) configuré pour être positionné sur ladite sangle de maintien(7) en ladite zone déterminée et qui est pourvu de moyens de mesure (24a,24b,38,46) configurés pour mesurer, dans cette dite zone déterminée, au moins un niveau de flexion et/ou d'inclinaison de ladite sangle (7),
- des moyens (26) configurés pour recueillir des valeurs (f,i) liées à ce niveau de flexion et/ou d'inclinaison,
- des moyens internes (26) ou externes configurés pour analyser ces valeurs et pour communiquer à des moyens récepteurs (56) des informations sur l'état de fonctionnement dudit harnais de maintien.

2. Dispositif de contrôle suivant la revendication précédente **caractérisé en ce que** le dispositif capteur (19) est associé à un circuit électronique (20) et l'élément allongé flexible (23) est fixé à celui-ci, notamment dans son prolongement, ces deux éléments étant contenus dans une enveloppe flexible et élastique (18) de façon à former un module apte à être immobilisé par rapport à la sangle (7).

3. Dispositif de contrôle suivant la revendication 2 **caractérisé en ce qu'**une extrémité du module comporte des moyens aptes à le fixer, notamment par l'intermédiaire d'une sangle, à un appui-tête du siège-enfant.

4. Dispositif de contrôle suivant l'une des revendications 2 ou 3 **caractérisé en ce que** l'enveloppe flexible (18) possède une élasticité telle, qu'en l'absence de sollicitation, ladite enveloppe flexible (18) prenne une forme non fléchie.

5. Dispositif de contrôle suivant la revendication 4 **caractérisé en ce que** l'élasticité de l'enveloppe flexible (18) lui est communiquée, au moins en partie, par un élément ressort additionnel, notamment intégré à l'enveloppe flexible (18).

6. Dispositif de contrôle suivant la revendication 5 **caractérisé en ce que** l'élément ressort est constitué d'au moins un jonc en fibre synthétique.

7. Dispositif de contrôle suivant l'une des revendications précédentes **caractérisé en ce que** le dispositif capteur est configuré pour être intégré à la sangle de maintien (7,9).

8. Dispositif de contrôle suivant l'une des revendications précédentes **caractérisé en ce que** les moyens de mesure du dispositif capteur comportent au moins un capteur d'inclinaison (25).

9. Dispositif de contrôle suivant la revendication précédente **caractérisé en ce qu'**au moins un capteur d'inclinaison est constitué d'un accéléromètre.

10. Dispositif de contrôle suivant l'une des revendications précédentes **caractérisé en ce que** le dispositif capteur (19) comprend deux inclinomètres (24a,24b) sensiblement disposés aux extrémités respectives de l'élément allongé flexible (23), l'écart entre les deux valeurs délivrées par ces inclinomètres (24a,24b) donnant une valeur du niveau de flexion de la sangle de maintien (7).

11. Dispositif de contrôle suivant l'une des revendications précédentes, **caractérisé en ce que** l'élément flexible et allongé (33) est recouvert d'un revêtement (38) tel que sa résistance électrique (R) varie lorsqu'on le soumet à une courbure.

12. Dispositif de contrôle suivant la revendication 11 **caractérisé en ce qu'**il comporte des moyens de mesure (48, 26) de la valeur de ladite résistance (R).

13. Siège de sécurité, notamment siège-auto, **caractérisé en ce qu'**il comporte un dispositif de contrôle suivant l'une des revendications précédentes.

## Patentansprüche

1. Vorrichtung, die zum Kontrollieren des guten Betriebszustandes eines Haltegeschirrs ausgestaltet ist, das für einen Sicherheitssitz (1) bestimmt ist, wobei der Sicherheitssitz wenigstens einen Haltegurt (7, 9) umfasst, der einer Spannung unterliegt, wenn der Haltegurt im Haltezustand eines Nutzers ist, wobei die genannte Kontrollvorrichtung ausgestaltet ist, um in einer bestimmten Zone des Haltegurtes angeordnet zu sein, wobei die Kontrollvorrichtung **dadurch gekennzeichnet ist, dass** sie umfasst:
- wenigstens eine Sensorvorrichtung (19), umfassend ein längliches und flexibles Element (23), das ausgestaltet ist, um auf dem genannten Haltegurt (7) in der genannten bestimmten Zone positioniert zu sein und die mit Messmitteln (24a, 24b, 38, 46) versehen ist, die zum Messen in dieser bestimmten Zone wenigstens eines Flexions- und / oder Neigungsniveaus des genannten Gurts (7) ausgestaltet sind,
- Mittel (26), die ausgestaltet sind, um Werte (f, i) aufzunehmen, die mit diesem Flexions- und / oder Neigungsniveau verbunden sind,
- interne (26) oder externe Mittel, die ausgestaltet sind, um diese Werte zu analysieren und um Empfängermitteln (56) Informationen über den Betriebszustand des genannten Haltegeschirrs zu übermitteln.

2. Kontrollvorrichtung gemäß dem voranstehenden Anspruch, **dadurch gekennzeichnet, dass** die Sensorvorrichtung (19) einer elektronischen Schaltung (20) zugeordnet ist und das längliche flexible Element (23) an dieser, insbesondere in ihrer Verlängerung, befestigt ist, wobei diese zwei Elemente in einer flexiblen und elastischen Hülle (18) derart enthalten sind, dass ein Modul geformt ist, das geeignet ist, im Verhältnis zum Gurt (7) blockiert zu sein.

3. Kontrollvorrichtung gemäß Anspruch 2, **dadurch gekennzeichnet, dass** ein Ende des Moduls Mittel umfasst, die geeignet sind, es insbesondere mittels eines Gurts an einer Kopfstütze des Kindersitzes zu fixieren.

4. Kontrollvorrichtung gemäß einem der Ansprüche 2 oder 3, **dadurch gekennzeichnet, dass** die flexible Hülle (18) eine derartige Elastizität besitzt, dass die genannte flexible Hülle (18) bei fehlendem Ansprechen eine nicht gebogene Form einnimmt.

5. Kontrollvorrichtung gemäß Anspruch 4, **dadurch gekennzeichnet, dass** die Elastizität der flexiblen Hülle (18) ihr wenigstens zum Teil durch ein zusätzliches Federelement übermittelt ist, das insbesondere in die flexible Hülle (18) integriert ist.

6. Kontrollvorrichtung gemäß Anspruch 5, **dadurch gekennzeichnet, dass** das Federelement wenigstens aus einem Lotdraht aus synthetischer Faser gebildet ist.

7. Kontrollvorrichtung gemäß einem der voranstehenden Ansprüche, **dadurch gekennzeichnet, dass** die Sensorvorrichtung ausgestaltet ist, um in den Haltegurt (7, 9) integriert zu sein.

8. Kontrollvorrichtung gemäß einem der voranstehenden Ansprüche, **dadurch gekennzeichnet, dass** die Messmittel der Sensorvorrichtung wenigstens einen Neigungssensor (25) umfassen.

9. Kontrollvorrichtung gemäß dem voranstehenden Anspruch, **dadurch gekennzeichnet, dass** wenigstens ein Neigungssensor aus einem Beschleunigungsmesser gebildet ist.

10. Kontrollvorrichtung gemäß einem der voranstehenden Ansprüche, **dadurch gekennzeichnet, dass** die Sensorvorrichtung (19) zwei Neigungsmesser (24a, 24b) umfasst, die deutlich an den jeweiligen Enden des länglichen flexiblen Elements (23) angeordnet sind, wobei der Abstand zwischen den zwei von diesen Neigungsmessern (24a, 24b) ausgegebenen Werten einen Wert des Flexionsniveaus des Haltegurtes (7) ergibt.

11. Kontrollvorrichtung gemäß einem der voranstehenden Ansprüche, **dadurch gekennzeichnet, dass** das flexible und längliche Element (33) mit einer Beschichtung (38) derart abgedeckt ist, dass sein elektrischer Widerstand (R) variiert, wenn es einer Krümmung unterworfen ist.

12. Kontrollvorrichtung gemäß Anspruch 11, **dadurch gekennzeichnet, dass** sie Messmittel (48, 26) des Wertes des genannten Widerstandes (R) umfasst.

13. Sicherheitssitz, insbesondere Autositz, **dadurch gekennzeichnet, dass** er eine Kontrollvorrichtung gemäß einem der voranstehenden Ansprüche umfasst.

## Claims

1. Device configurated for checking a securing harness, intended for a safety seat (1), the safety seat including at least one retaining strap (7, 9) subjected to tension when the securing harness is in the state of holding an occupant, said device is configurated to be disposed in a correct operational condition, where said device is configurated to be installed in a determined area of this retaining strap, the device is **characterised by** the fact that it includes:
- at least one sensor device (19) including an elongated, flexible element (23) configurated to be positioned on said retaining strap (7) in said determined area, which has measuring means (24a, 24b, 38, 46) configurated to measure, in this said determined area, at least one level of flexion and/or inclination of said strap (7),
- means (26) configurated to obtain values (f, i) relating to this level of flexion and/or inclination,
- internal (26) or external means configurated to analyse these values and to communicate to receiver means (56) data concerning the operational condition of said securing harness.

2. Checking device according to the previous claims **characterised by** the fact that the sensor device (19) is associated with an electronic circuit (20), and the elongated, flexible element (23) is attached to it, in particular as an extension to it, both of these elements being contained in a flexible, elastic envelope (18) so as to form a module which can be immobilised relative to the strap (7).

3. Checking device according to claim 2 **characterised by** the fact that one end of the device includes means able to attach it, in particular using a strap, to a headrest of the child seat.

4. Checking device according to one of claims 2 or 3 **characterised by** the fact that the flexible envelope (18) has elasticity such that, when it is under no stress, said flexible envelope (18) has an unbent shape.

5. Checking device according to claim 4 **characterised by** the fact that the elasticity of the flexible envelope (18) is communicated to it, at least partly, by an additional spring element, in particular one incorporated in the flexible envelope (18) .

6. Checking device according to claim 5 **characterised by** the fact that the spring element consists of at least one snap ring made of synthetic fibre.

7. Checking device according to one of previous claims **characterised by** the fact that the sensor device is configurated to be integrated in the retaining strap (7, 9).

8. Checking device according to one of previous claims **characterised by** the fact that measuring means of the sensor device includes at least one inclination sensor (25).

9. Checking device according to the previous claim **characterised by** the fact that at least one inclination sensor consists of an accelerometer.

10. Checking device according to one of previous claims **characterised by** the fact that the sensor device (19) includes two inclinometers (24a, 24b) installed roughly at the respective ends of the elongated, flexible element (23), where the difference between the two values delivered by these inclinometers (24a, 24b) gives a value of the level of flexion of the retaining strap (7).

11. Checking device according to one of previous claims **characterised by** the fact that the flexible, elongated element (33) is covered with a coating (38), such that its electrical resistance (R) varies when it is bent.

12. Checking device according to claim 11 **characterised by** the fact that it includes means (48, 26) to measure the value of said resistance (R).

13. Safety seat, in particular a car seat, **characterised by** the fact that it includes a checking device according to one of previous claims.
